# EUROPEAN PATENT SPECIFICATION

(11) **EP 1 936 825 B1**
(45) Date of publication and mention of the grant of the patent: **11.04.2012**
(21) Application number: 06292040.0
(22) Date of filing: 21.12.2006
(51) Int. Cl.: H04B 3/32, H04M 11/06

(54) **A transient crosstalk controlling device**
Steuervorrichtung für transientes Nebensprechen
Dispositif de contrôle de la diaphonie transitoire

(43) Date of publication of application: 25.06.2008
(73) Proprietor: Alcatel Lucent, 75007 Paris (FR)
(72) Inventor: Verlinden, Jan Sylvia, 2160 Wommelgem (BE)
(74) Representative: Anderlini, Alain

(56) References cited:
- WO-A-2006/129140
- US-A1- 2006 029 148

## Description

### Field of the Invention

The present invention generally relates to mitigating the effects resulting from crosstalk between different communication lines, for instance between DSL (Digital Subscriber Line) loops extending from a single access node, or even worse from a single line termination board (LT or linecard) in an access node and possible forming part of the same cable, cable binder or virtual cable binder. The current invention is in particular concerned with transient crosstalk, i.e. noise that is induced by a subscriber line that is powered on and/or newly taken into service into other subscriber lines before it can be cancelled by a crosstalk cancellation mechanism. Such transient crosstalk typically generates large amounts of errors on the other subscriber lines during a transition phase which typically lasts an amount of time corresponding to the time it takes for traditional crosstalk cancellation mechanisms to estimate the crosstalk induced by the new line into the other lines and to adapt the crosstalk cancellation coefficients hereto.

### Background of the Invention

Known ways to reduce the effects of noise, including errors resulting from crosstalk, rely on physical layer techniques such as FEC (forward error correction) and/or higher layer techniques such as retransmission mechanisms.

Forward error correction (FEC) mechanisms are based on the calculation of a FEC code, i.e. an amount of redundant bits or bytes that are added to each data packet and that can be used in the receivers decoder to recover a limited number of transmission errors, e.g. errors due to crosstalk. Popular FEC mechanisms are for instance Reed-Solomon encoding, Parity-Based encoding, Harris Ascent encoding, ... FEC mechanisms are usually implemented at the physical layer and are often combined with interleaving to increase the length of the noise bursts that can be corrected. Reed-Solomon FEC and interleaving are for instance used on ADSL (Asymmetric Digital Subscriber Line) loops that comply with international standards such as the ITU-T G.992.1 (ADSL), ITU-T G.992.3 (ADSL2) or ITU-T G.992.5 (ADSL2+) standards.

FEC mechanisms are adequate to correct impulse noise errors, i.e. errors resulting from a noise burst that is limited in duration. Transient crosstalk resulting from an upcoming subscriber line typically lasts a few minutes as a consequence of which FEC fails to provide a solution to this type of noise.

Retransmission mechanisms consist in repairing corrupted data packets by re-sending the data packets for which a retransmission request has been received. The retransmission request can be issued by the receiver that has received an irrecoverably affected data packet (such implementations are often referred to as ARQ or Automatic Repeat Request mechanisms) or alternatively can be issued by a timer waiting for the receiver to acknowledge the reception of a data packet but not receiving such acknowledgement within a predefined time from the sending of that data packet. Combinations of both, i.e. retransmission requests from the receiver for irrecoverably damaged packets and retransmission requests from a timer in or near the transmitter for unacknowledged or lost data packets, are described in literature as well. As already mentioned above, retransmission is typically done at the higher layers, i.e. the protocol stack layers above the physical layer such as the TCP layer or Transmission Control Protocol layer.

Retransmission techniques at higher layers may be combined with FEC techniques at the physical layer in order to mitigate the effect of crosstalk noise bursts that exceed the typical length of impulse noise bursts. A synergy between the two mechanisms with FEC being used to repair single packet losses and retransmission being used as an additional recovery mechanism, is for instance suggested in *paragraph 4.1 of RFC 2354 "Options for Repair of Streaming Media",* published at the IETF website and downloadable from the Internet via the URL:
http://www.ietf.org/rfc/rfc2354.txt?number=2354

Most probably, the transient crosstalk resulting from a powered-on subscriber line or from a new subscriber line that is taken into service will last so long that higher layer retransmissions, whether or not combined with FEC and interleaving at the physical layer, will remain insufficient to free the other, already active subscriber lines from crosstalk errors.

Another, less straightforward prior art solution that can be used on victim lines of crosstalk, is named SRA (Seemless Rate Adaptation) or DRA (Dynamic Rate Adaptation). SRA or DRA is a procedure that enables to reduce the up- and downstream bit rates on the victim subscriber lines online, in such a way that these lines can cope with the additional noise without having to restart. DRA is for instance described in detail in Appendix II to the ITU-T Standard Specification G.992.1 entitled Asymmetric Digital Subscriber Line (ADSL) transceivers", page 226-239*.* As is mentioned on paragraph II.1 thereof, DRA is designed to cancel noise or errors that would involve service interruption of the order of tens of milliseconds. DRA or SRA is not designed to work in a very noisy, lengthy period of time like during the transient phase of an upcoming subscriber line. During such transient which may last several minutes, there will be too many errors in the communication on neighbouring lines sharing the same line termination board, cable, or cable binder with the newly upcoming subscriber line. In addition, DRA or. SRA has the disadvantage, that it relies on a protocol for negotiating and communicating the lower bit rate. The protocol messages are transferred over the strongly affected subscriber line: In particular; in a very noisy environment, such as the one generated through an upcoming subscriber line, DRA or SRA might be incapable to even inform the other side (either the central office or the customer premises) on the proposed lower bit rate.

Yet another prior art solution that could be implemented to anticipate service interruption due to crosstalk induced by a newly operated or powered-on subscriber line is based on the injection of virtual noise, being an estimation of a single, virtual crosstalk source that represents all transition effects. Although virtual noise guarantees stability, its usefulness for transient crosstalk cancellation is doubtful. Since the transition period will last only a few minutes, the permanent reduction in bit rate that results from virtual noise will be too dramatic as a measure.

United States Patent Application US 2006/0029148 entitled "Method and Apparatus for Training Using Variable Transmit Signal Power Levels" describes an iterative process for activating a newly upcoming channel for upstream transmission (paragraphs [0072] - [0078]). A low power training signal is sent on the newly upcoming channel as part of the training procedure (step 812 in Fig. 8). The already active channels thereupon adapt their MIMO filter coefficients to the changed crosstalk conditions (step 816). In successive iterations, the power level of the training signal sent over the newly upcoming channel is then gradually increased (step 820) and the already active channels further adapt their filter coefficients (step 824). The procedure described in US 2006/0029148 concerns gradual, iterative, slowed down taking into operation of the newly upcoming channel. Because of its iterative nature, the procedure disclosed in US 2006/0029148 is rather lengthy, possibly delaying full operation of the newly upcoming channel for minutes. A further drawback of the iterative process described in US 2006/0029148, is that it permanently affects the throughput of the victim lines because no mechanism is described to return to the initial situation after activation of the newly upcoming line. The process described in US 2006/0029148 in other words is not destined to tackle transient crosstalk that is induced when powering on and taking into service a new line, but rather deals with persistent crosstalk effects resulting from the additional line.

A similar prior art solution is described in the international Patent Application WO 2006/129140 entitled "DSL System Training". More particularly Fig. 4 and Fig. 5 therein illustrate an iterative process wherein the transmit power of a newly upcoming subscriber line is set low initially (step 410 or 510) to be gradually raised in successive iterations (step 450 or 550). During each iteration cycle, the already active lines are checked for changed crosstalk conditions (step 430 or 530) and operational parameters are adjusted to accommodate the newly upcoming subscriber line (step 440 or 540). In WO 2006/129140 there is no guarantee that the already active subscriber lines have been adapted successfully to the changed crosstalk conditions. The newly upcoming line is enabled to become active immediately, albeit at a low power level (Fig. 4) or with a reduced set of tones (Fig. 5), and the newly upcoming line will become fully operational only after a number of iterations. Such iterative procedure may take minutes.

It is an object of the present invention to provide a crosstalk controlling device that mitigates the effects of transient crosstalk more efficiently than the known prior art solutions. In particular, the crosstalk controlling device according to the invention must be able to avoid crosstalk errors as a result of the minutes lasting transient phase during which a new subscriber line is upcoming, without permanently affecting the throughput of the victim lines.

### Summary of the Invention

According to the invention, the above object is realized and the shortcomings of the prior art solutions are overcome by the crosstalk controlling device defined in claim 1, comprising:
a. means for receiving information indicative of a newly upcoming subscriber line;
b. means for delaying start-up of said newly upcoming subscriber line,
c. means for triggering a crosstalk anticipating algorithm on other, active subscriber lines;
d. means for receiving information indicative of a successful execution of said crosstalk anticipating algorithm on at least part of the other, active subscriber lines; and
e. means for allowing the newly upcoming subscriber line to start up only after receipt of said information indicative of a successful execution of said crosstalk anticipating algorithm on at least part of the other, active subscriber lines.

Thus, the crosstalk controlling device according to the current invention delays the start-up of a new upcoming line in order to enable other, active lines to prepare for the upcoming crosstalk. Crosstalk anticipation is executed on the potential victim lines and will most probably be successful. After crosstalk anticipation has been executed successfully on at least part of the potential victim lines, the new line can safely start up because the victim lines are prepared for the additional crosstalk. Preferably, successful crosstalk anticipation has been confirmed on all potential victim lines before the newly upcoming line is enabled to start-up, but implementations wherein the crosstalk anticipation is executed only on the most critical lines, e.g. high end DSL lines of business clients, are of course not excluded. In such implementations, victim lines whereon the impact of crosstalk is experienced as less critical, get more time to adapt their bit rate or crosstalk cancellation without further delaying the start-up of the new line.

As is indicated by claims 2 and 3, the crosstalk anticipation algorithm may consist in calculation or re-calculation of the bit rate (possibly up- and downstream) on the victim lines taking into account the fact that the new line will start-up, or may consist in calculation or re-calculation the coefficients of the crosstalk cancellation mechanism implemented on the victim lines, such as the crosstalk cancellation coefficients, taking into account the fact that the new line will start-up. The latter implementation wherein the crosstalk cancellation coefficients are re-calculated may require transmission of a test signal at a lower PSD (Power Spectral Density) level on the new line in order to enable estimation of the crosstalk cancellation coefficients on the victim lines. The current invention in the latter case delays the transition from the lower PSD level to nominal PSD level on the newly upcoming line until successful re-calculation of the crosstalk cancellation coefficients on at least the most critical victim lines has been confirmed

An optional feature of the crosstalk controlling device according to the present invention, defined by claim 4, is that the crosstalk controlling device further comprises:
f. means for triggering a crosstalk anticipating algorithm on said other, active subscriber lines after the newly upcoming subscriber line has become active.

Indeed, as soon as the transient period is over, crosstalk anticipation can be used again to increase the bit rate on the victim lines or to adjust the crosstalk cancellation coefficients on the victim lines. The noise resulting from the transient will have disappeared. Hence, it is no longer necessary to reduce the bit rate on the victim lines or to cancel crosstalk to the same extent.

A further optional feature of the current invention, defined by claim 5, is that its means for receiving information indicative of a newly upcoming subscriber line comprise means for receiving a handshake signal from customer premises equipment connected to the newly upcoming subscriber line.

During such handshake, only limited amount of information is exchanged between the access node where the crosstalk controlling device forms part of and the customer premises equipment. Also, the power on the line is very limited during the handshake procedure. As a consequence, the crosstalk induced during the handshake procedure is limited. Instead of immediately answering the handshake request from the customer premises equipment, the crosstalk controlling device according to the invention will initiate rate adaptation or calculation of the crosstalk cancellation coefficients on the potential victim lines. It will allow the upcoming line to start-up only after successful rate adaptation or successful crosstalk cancellation on at least the most critical victim lines.

As is indicated by claims 6 and 7, the crosstalk controlling device according to the present invention may be integrated in a Digital Subscriber Line Access Multiplexer (DSLAM), and may be implemented their on one or more linecards.

This way, copper pairs connected to a line termination board in the DSLAM can be protected against transient crosstalk originating from newly operated or newly powered DSL lines. If the assumption is made that all lines that form part of a single cable, binder or virtual binder are terminated on a single linecard, the crosstalk controlling device is best implemented on the linecard. In case subscriber lines that form part of the same cable, binder or virtual binder can be terminated on plural linecards, the crosstalk controlling device according to the present invention may be implemented more centrally where it has an overview on all lines terminated on the DSLAM, or more generally the access node.

### Brief Description of the Drawing

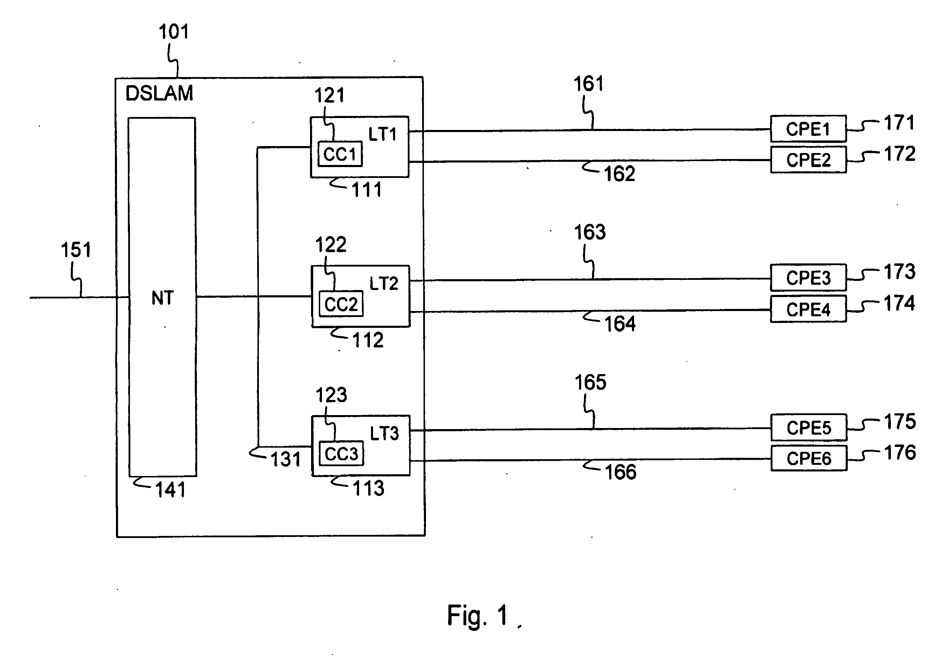

Fig. 1 illustrates a DSL network wherein the central office DSLAM is equipped with an embodiment of the crosstalk controlling device according to the present invention.

### Detailed Description of Embodiment(s)

Fig. 1 shows a Digital Subscriber Line Access Multiplexer (DSLAM) 101 comprising a network termination or NT 141 and a number of DSL line termination boards or LTs, three of which are shown, i.e. LT1 or 111, LT2 or 112 and LT3 or 113. The line termination boards, inter alia 111, 112 and 113, are interconnected with the network termination board 141. This NT-LT interconnection may have a point-to-point architecture or a point-to-multipoint architecture like 131, and can be implemented through individual wiring, a bus, a switch, etc. The network termination 141 provides uplink connectivity to the aggregation or edge network typically through a high capacity uplink 151, for instance an optical fibre. In the downlink direction towards the subscriber premises, each line termination board typically enables up to a few tens, e.g. 48, 72, 96, etc. subscriber lines to terminate on the DSLAM 101. In Fig. 1, two subscriber lines 161 and 162 extend from the first line termination board, LT1 or 111, to respectively a first CPE DSL modem 171 and a second CPE DSL modem 172. Similarly, Fig. 1 shows two DSL CPE modems, 173 and 174, that are connected to the second line termination board, LT2 or 112, via respective subscriber lines 163 and 164. Another set of two DSL CPE modems drawn in Fig. 1, 175 and 176, are connected via respective subscriber lines 165 and 166 to the third line termination board, LT3 or 113. The three shown LT boards, 111, 112 and 113, each host a transient crosstalk controlling device operating according to the principles of the present invention, i.e. CC1 or 121, CC2 or 122, and CC3 or 123. The working of these transient crosstalk controlling devices will be explained in the following paragraphs through some example scenario's wherein a new subscriber line is taken into service, an existing subscriber line is powered-on, and another existing subscriber line re-starts after service interruption.

To explain the working of the crosstalk controlling devices 121, 122 and 123 when a new subscriber line is taken into service, it is assumed that DSL subscriber line 161 is already active when DSL subscriber line 162 is taken into operation. When the latter DSL line 162 is taken into operation, CPE DSL modem 172 will start the initialisation by sending a handshake signal over the line 162. During the handshake, only a limited amount of information is shared between the DSL CPE modem 172 and the corresponding DSL CO modem on the line termination board 111, and also the power on the line 162 is very limited as a result of which the crosstalk towards other lines is restricted. Upon receipt of the handshake signal by the DSL CO modem on the line termination board 111, no immediate acknowledgement to continue further with handshake will be given to the handshake request. The line controller for subscriber line 162 shall inform the transient crosstalk controlling device 121 on the received handshake request whereupon the transient crosstalk controller device 121 shall instruct the line controllers on all active DSL lines extending from the line termination board 111 to apply the crosstalk anticipation mechanism being seamless rate adaptation algorithm (SRA) or crosstalk cancellation filter coefficient estimation on all these lines. In the first case, the line controller of DSL line 161 shall instruct the CO DSL modem software or hardware to execute the SRA algorithm taking into account that DSL line 162 attempts to start-up. Similarly, other CO modems on LT1 that serve active DSL lines will be requested to execute the SRA algorithm to anticipate transient crosstalk from the newly upcoming DSL line 161. Using the SRA algorithm, these subscriber lines shall reduce their bit rate in order to prepare these lines for the additional crosstalk during the transient period wherein DSL line 162 will come into operation and wherein the traditional crosstalk cancellation mechanism(s) have not yet adapted to the changed crosstalk situation. As soon as the SRA algorithm has been executed successfully on the victim lines, the line controllers of these lines inform the transient crosstalk controlling device 121 accordingly. When the transient crosstalk controlling device 121 has received confirmation that the SRA algorithm has been successfully executed on all active DSL lines terminated on the line termination board 111, it shall allow the new DSL line 162 to start-up. Thereto, the transient crosstalk controlling device 121 instructs the line controller of DSL line 162 to respond to the handshake request and hence to continue with the initialisation of the DSL line 162. The CPE DSL modem 172 and the corresponding CO DSL modem on line termination board 111 shall go through the complete initialisation sequence. Thereafter, the DSL line 162 shall be operational. During the transient phase wherein DSL line 162 comes into operation, the crosstalk induced in the other, already active DSL lines terminated on line termination board 111 shall not affect these lines to such extent that the service on any of them is interrupted, because the lower bit rates where these lines have switched to, can be maintained in the presence of the additional noise.

As soon as the crosstalk channels originating from the new DSL line 162 have been estimated, the transient period is over. At this point in time, the transient crosstalk controlling device 121 shall again instruct the other active DSL lines terminated on line termination board 111 to execute the SRA algorithm. The crosstalk cancellation coefficients are now adapted to optimally cancel the additional crosstalk noise, and the SRA algorithm will increase the bit rate safely on the other active DSL lines and adapt it to the new crosstalk noise level. Concluding, the bit rate on the other active DSL lines shall be decreased temporarily in order to enable the new DSL line 162 to become operational. Thereafter, the bit rate on the other active DSL lines shall increase again to the maximum achievable bit rate taking into account the new crosstalk situation.

In a second scenario, CPE DSL modem 173 which has been in service before may be powered on. This will result in the sending of a handshake request towards the corresponding CO DSL modem on LT2. The line controller of DSL line 163, which permanently monitors line 163 for handshake signals, shall flag the presence of the handshake signal to the transient crosstalk controlling device 122, which will instruct the line controllers on al other active DSL lines terminated on LT2 to initiate the SRA algorithm. As a consequence, SRA will be executed on DSL line 164. When the bit rate has been decreased on DSL line 164 to anticipate the upcoming increase in crosstalk, the line controller of DSL line 164 informs the transient crosstalk controlling device 122 on the successful SRA execution. Thereupon, the transient crosstalk controlling devices 122 allows DSL line to continue powering on by enabling the line controller of that line to respond to the received handshake request.

A third scenario that is considered, is the situation where DSL line 165 is active at the point in time where DSL line 166 suffers from a service interruption and as a result thereof attempts to re-start automatically. Such an automatic re-start shall also be initiated through the sending of a handshake request from CPE DSL modem 176 to the corresponding CO DSL modem on the third line termination board 123 in DSLAM 101. The line controller of DSL line 166 recognizes the handshake request, does not enable the CO modem to immediately acknowledge to continue further with handshake, but informs the transient crosstalk controlling device 123 on the received handshake. Similar to the above described scenario's, the transient crosstalk controlling device 123 shall instruct the line controllers of all active DSL lines terminated on LT3 to execute the SRA algorithm and lower their bit rates in preparation for the upcoming transient crosstalk. After successful execution of SRA, the line controllers inform the transient crosstalk controlling device 123 which thereupon allows responding to the received handshake request on DSL line 165 as a result of which this line can re-start.

Although it was mentioned above that the crosstalk controller devices 121, 122 and 123 await successful execution of the SRA algorithm on all active DSL lines connected to the same linecard as the one whereto the new DSL line that attempts to start-up is connected, it is noticed that variant embodiments of the crosstalk controlling device according to the present invention may enable the new DSL line to become operational as soon as the SRA algorithm (or a variant crosstalk anticipation measure) has been executed successfully on the most critical, active DSL lines, e.g. the high end business DSL lines. Less critical subscriber lines, e.g. subscriber lines whereon less critical services are delivered or subscriber lines for which the subscriber pays a smaller subscription fee, may not be addressed by the crosstalk controlling device when a new line attempts to start-up, or may be informed such that they can lower their bit rate although unsuccessful decrease of the bit rate on such lines will not-further delay the upcoming of the new line.

Another remark is that although the described embodiment instructs execution of the SRA algorithm in order to anticipate crosstalk that will be induced by the new DSL line during the transient phase, the present invention is not restricted to any particular bit rate decrease algorithm such as SRA. Interrupting the start-up of a new subscriber line until all or a selection of critical, active subscriber lines have anticipated the transient crosstalk, can be achieved by various rate decreasing algorithms, but alternatively also by estimation of the crosstalk and re-calculation of the crosstalk compensating filter coefficients. The result shall anyhow be that the new subscriber line that attempts to start-up, will not be allowed to become operational at its nominal PSD level until the other DSL lines in the same cable, binder or virtual binder have had the chance to adapt to the upcoming transient crosstalk noise.

Yet another remark is that the above described embodiment illustrates a crosstalk controlling device that forms part of a linecard or line termination board. In DSLAM 101, each linecard is assumed to be equipped with a similar crosstalk controlling device. If however subscriber lines that form part of the same physical cable or - even worse - of the same physical cable binder, are terminated on different linecards in the DSLAM, it is possible to implement the crosstalk controlling device of the current invention more centrally such that the transient crosstalk is anticipated on all subscriber lines connected to the DSLAM before a new line is taken into operation. Should information be available on the binder or cable structure, such information would be useful to enhance the scalability of the just described central implementation. Instead of anticipating the transient crosstalk on all subscriber lines terminated on the access node, such information could be used to reduce the set of subscriber lines whereon the crosstalk anticipating algorithm will be used before enabling the new subscriber line to become operational.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims.

## Claims

1. A crosstalk controlling device (121; 122; 123) for use in an access node (101) whereto plural subscriber lines (161; 162; 163; 164; 165; 166) are connected, and comprising:
a. means for receiving information indicative of a newly upcoming subscriber line (162; 163; 166);
b. means for delaying start-up of said newly upcoming subscriber line (162; 163; 166),
c. means for triggering a crosstalk anticipating algorithm on other, active subscriber lines (161; 164; 165);
d. means for receiving information indicative of a successful execution of said crosstalk anticipating algorithm on at least part of said other, active subscriber lines (161; 164; 165); and
e. means for allowing said newly upcoming subscriber line (162; 163; 166) to start up only after receipt of said information indicative of a successful execution of said crosstalk anticipating algorithm on at least part of said other, active subscriber lines (161; 164; 165).

2. A crosstalk controlling device (121; 122; 123) according to claim 1,
**CHARACTERIZED IN THAT** said crosstalk anticipating algorithm corresponds to an algorithm for calculating a rate adaptation.

3. A crosstalk controlling device (121; 122; 123) according to claim 1,
**CHARACTERIZED IN THAT** said crosstalk anticipating algorithm corresponds to an algorithm for calculating crosstalk cancellation coefficients.

4. A crosstalk controlling device (121; 122, 123) according to claim 1,
**CHARACTERIZED IN THAT** said crosstalk controlling device (121; 122; 123) further comprises:
f. means for triggering a crosstalk anticipating algorithm on said other, active subscriber lines (161; 164; 165) after said newly upcoming subscriber line (162; 163; 166) has become active.

5. A crosstalk controlling device (121; 122; 123) according to claim 1,
**CHARACTERIZED IN THAT** said means for receiving information indicative of said newly upcoming subscriber line (162; 163; 166) comprise means for receiving a handshake signal from customer premises equipment (172; 173; 176) connected to said newly upcoming subscriber line (162; 163; 166).

6. A crosstalk controlling device (121; 122; 123) according to claim 1,
**CHARACTERIZED IN THAT** said access node (101) is a Digital Subscriber Line Access Multiplexer.

7. A crosstalk controlling device (121; 122; 123) according to claim 6,
**CHARACTERIZED IN THAT** said crosstalk controlling device (121; 122; 123) is implemented on at least one linecard (111; 112; 113) in said Digital Subscriber Line Access Multiplexer (101).

## Patentansprüche

1. Steuervorrichtung für Nebensprechen (121; 122; 123) für die Verwendung in einem Zugangsknoten (101), an welchen mehrere Teilnehmerleitungen (161; 162; 163; 164; 165; 166) angeschlossen sind, und umfassend:
a. Mittel für den Empfang von Informationen, welche für eine neu eingerichtete Teilnehmerleitung (162; 163; 166) indikativ sind;
b. Mittel für die Verzögerung der Inbetriebnahme der besagten neu eingerichteten Teilnehmerleitung (162; 163; 166);
c. Mittel für das Auslösen eines Nebensprech-Antizipationsalgorithmus auf anderen, aktiven Teilnehmerleitungen (161; 164; 165);
d. Mittel für den Empfang von Informationen, welche für ein erfolgreiches Ausführen des besagten Nebensprech-Antizipationsalgorithmus auf mindestens einem Teil der besagten anderen, aktiven Teilnehmerleitungen (161; 164; 165) indikativ sind; und
e. Mittel, die es ermöglichen, dass die besagte neu eingerichtete Teilnehmerleitung (162; 163; 166) erst nach Empfang der besagten Informationen, welche für ein erfolgreiches Ausführen des besagten Nebensprech-Antizipationsalgorithmus auf mindestens einem Teil der besagten anderen, aktiven Teilnehmerleitungen (161; 164; 165) indikativ sind, in Betrieb genommen wird.

2. Steuervorrichtung für Nebensprechen (121; 122; 123) nach Anspruch 1,
**DADURCH GEKENNZEICHNET, DASS** der besagte Nebensprech-Antizipationsalgorithmus einem Algorithmus für die Berechnung einer Ratenanpassung entspricht.

3. Steuervorrichtung für Nebensprechen (121; 122; 123) nach Anspruch 1,
**DADURCH GEKENNZEICHNET, DASS** der besagte Nebensprech-Antizipationsalgorithmus einem Algorithmus für die Berechnung von Nebensprechunterdrückungskoeffizienten entspricht.

4. Steuervorrichtung für Nebensprechen (121; 122; 123) nach Anspruch 1,
**DADURCH GEKENNZEICHNET, DASS** die besagte Steuervorrichtung für Nebensprechen (121; 122; 123) weiterhin umfasst:
f. Mittel zum Auslösen eines Nebensprech-Antizipationsalgorithmus auf den anderen, aktiven Teilnehmerleitungen (161; 164; 165), nachdem die besagte neu eingerichtete Teilnehmerleitung (162; 163; 166) aktiv geworden ist.

5. Steuervorrichtung für Nebensprechen (121; 122; 123) nach Anspruch 1,
**DADURCH GEKENNZEICHNET, DASS** die besagten Mittel für den Empfang von Informationen, welche für die besagte neu eingerichtete Teilnehmerleitung (162; 163; 166) indikativ sind, Mittel für den Empfang eines Handshake-Signals von einem an die besagte neu eingerichtete Teilnehmerleitung (162; 163; 166) angeschlossenen Teilnehmer-Endgerät (172; 173; 176) umfassen.

6. Steuervorrichtung für Nebensprechen (121; 122; 123) nach Anspruch 1,
**DADURCH GEKENNZEICHNET, DASS** der besagte Zugangsknoten (101) ein digitaler Teilnehmeranschlusszugangs-Multiplexer ist.

7. Steuervorrichtung für Nebensprechen (121; 122; 123) nach Anspruch 6,
**DADURCH GEKENNZEICHNET, DASS** die besagte Steuervorrichtung für Nebensprechen (121; 122; 123) auf mindestens einer Leitungskarte (111; 112; 113) in dem besagten digitalen Teilnehmeranschlusszugangs-Multiplexer (101) implementiert wird.

## Revendications

1. Dispositif de contrôle de la diaphonie (121 ; 122 ; 123) à utiliser dans un noeud d'accès (101) auquel sont connectées plusieurs lignes d'abonné (161 ; 162 ; 163 ; 164 ; 165 ; 166), et comprenant :
a. des moyens pour recevoir des informations indiquant une ligne d'abonné nouvellement arrivée (162 ; 163 ; 166) ;
b. des moyens pour retarder le démarrage de ladite ligne d'abonné nouvellement arrivée (162 ; 163 ; 166) ;
c. des moyens pour déclencher un algorithme d'anticipation de diaphonie sur d'autres lignes d'abonné actives (161 ; 164 ; 165) ;
d. des moyens pour recevoir des informations indiquant une exécution réussie dudit algorithme d'anticipation de diaphonie sur au moins une partie desdites autres lignes d'abonné actives (161 ; 164 ; 165) ; et
e. des moyens pour autoriser ladite ligne d'abonné nouvellement arrivée (162 ; 163 ; 166) à démarrer uniquement après avoir reçu lesdites informations indiquant une exécution réussie dudit algorithme d'anticipation de diaphonie sur au moins une partie desdites autres lignes d'abonné actives (161 ; 164 ; 165).

2. Dispositif de contrôle de la diaphonie (121 ; 122 ; 123) selon la revendication 1,
**CARACTÉRISÉ EN CE QUE** ledit algorithme d'anticipation de diaphonie correspond à un algorithme pour calculer une adaptation de débit.

3. Dispositif de contrôle de la diaphonie (121 ; 122 ; 123) selon la revendication 1,
**CARACTÉRISÉ EN CE QUE** ledit algorithme d'anticipation de diaphonie correspond à un algorithme pour calculer des coefficients d'annulation de diaphonie.

4. Dispositif de contrôle de la diaphonie (121 ; 122 ; 123) selon la revendication 1,
**CARACTÉRISÉ EN CE QUE** ledit dispositif de contrôle de la diaphonie (121 ; 122 ; 123) comprend en outre :
f. des moyens pour déclencher un algorithme d'anticipation de diaphonie sur lesdites autres lignes d'abonné actives (161 ; 164 ; 165) après que ladite ligne d'abonné nouvellement arrivée (162 ; 163 ; 166) est devenue active.

5. Dispositif de contrôle de la diaphonie (121 ; 122 ; 123) selon la revendication 1,
**CARACTÉRISÉ EN CE QUE** lesdits moyens pour recevoir des informations indiquant ladite ligne d'abonné nouvellement arrivée (162 ; 163 ; 166) comprennent des moyens pour recevoir un signal de reconnaissance provenant de l'équipement des locaux d'abonné (172 ; 173 ; 176) connecté à ladite ligne d'abonné nouvellement arrivée (162 ; 163 ; 166).

6. Dispositif de contrôle de la diaphonie (121 ; 122 ; 123) selon la revendication 1,
**CARACTÉRISÉ EN CE QUE** ledit noeud d'accès (101) est un multiplexeur d'accès de ligne d'abonné numérique.

7. Dispositif de contrôle de la diaphonie (121 ; 122 ; 123) selon la revendication 6,
**CARACTÉRISÉ EN CE QUE** ledit dispositif de contrôle de la diaphonie (121 ; 122 ; 123) est mis en oeuvre sur au moins une carte de ligne (111 ; 112 ; 113) dans ledit multiplexeur d'accès de ligne d'abonné numérique (101).
